# EUROPEAN PATENT APPLICATION

(11) **EP 4 596 305 A1**
(43) Date of publication of application: **06.08.2025**
(21) Application number: 23954987.6
(22) Date of filing: 12.12.2023
(51) Int. Cl.: B60L 53/30, B60L 53/18, B60L 53/16, B65H 75/36, H02G 11/02

(54) **CHARGER**

(71) Applicant: LG ELECTRONICS INC., Yeongdeungpo-gu Seoul 07336 (KR)
(72) Inventor: KIM, Younghoon, Seoul 06772 (KR); KIM, Cheolsoo, Seoul 06772 (KR); JO, Jihwan, Seoul 06772 (KR)
(74) Representative: Vossius & Partner Patentanwälte Rechtsanwälte mbB
(86) International application number: PCT/KR2023/020433
(87) International publication number: WO 2025/127182

(57) **Abstract**

A charger comprises a wire; a pulley guiding the wire; a pulley guide in which the pulley is rotatably disposed; a first weight disposed in the pulley guide; a weight guide; a second weight accommodated inside the weight guide and raised by at least one of the pulley guide and the first weight; and a damper disposed in the weight guide and on which the second weight is seated when the second weight is lowered.

## Description

### [Technical Field]

The present disclosure relates to a charger.

### [Background Art]

A charger is a device used to charge a battery.

An example of a charger may be an electric vehicle charger that charges a vehicle such as an electric vehicle, and electrical energy is supplied to the battery of the electric vehicle by connecting a charging connector provided at the end part of a charging cable to a connection inlet installed in the electric vehicle.

The charger comprises a power module to which a charging cable is connected and a charger body that forms a space in which the power module is accommodated.

The user may connect the connector (charging gun or plug) provided on the charging cable to the vehicle after pulling it out from the charger body.

U.S. Patent Publication No. US 11,260,767 B2 (patented May 01, 2022) discloses a cable recovery system including a wire connected to a charging cable, the cable recovery system including an enclosure having an opening formed therein, a movable pulley movably accommodated in the enclosure, a movable counterweight connected to the movable pulley, a ring fixed to the interior of the enclosure, a pulley disposed around the opening of the enclosure, and a wire having one end connected to the ring and the other end connected to the cable and raising and lowering the movable pulley.

### [Disclosure]

### [Technical Problem]

The present embodiment provides a charger in which the restoring force for recovering a wire increases as the length of the wire drawn out increases.

The present embodiment provides a charger in which damage or breakage that may occur when a wire is restored is minimized.

### [Technical Solution]

A charger according to an embodiment comprises a wire; a pulley guiding the wire; a pulley guide in which the pulley is rotatably disposed; a first weight disposed in the pulley guide; a weight guide; a second weight accommodated inside the weight guide and raised by at least one of the pulley guide and the first weight; and a damper disposed in the weight guide and on which the second weight is seated when the second weight is lowered.

A gradient portion seated on the damper may be formed on the second weight.

The weight guide may comprise a damper mounting portion on which the damper is mounted.

The damper mounting portion may be formed to be inclined at the same angle as the gradient portion.

The damper may comprise an upper damper and a lower damper mounted on damper mounting portion.

A plurality of second weights may be provided.

The damper may be disposed for each of the second weights.

The plurality of second weights may be heavier as they are located at the top.

A plurality of second weights may be with different positions of the gradient portions.

The gradient portion of the second weight located on the upper side among the plurality of second weights may not overlap the gradient portion of the second weight located on the lower side among the plurality of second weights in the vertical direction.

The damper located on the upper side and the damper located on the lower side may not overlap in the vertical direction.

A plurality of damper mounting portions may be provided, and heights of the plurality of mounting parts may be different from each other.

The weight guide may further comprise a guide portion that guides the second weight.

The guide portion may connect a pair of adjacent damper mounting portions among a plurality of damper mounting portions.

The damper may comprise an upper damper and a lower damper mounted on the damper mounting portion.

An upper height of the upper damper may be higher than an upper height of the lower damper.

A wire penetration hole through which the wire passes may be formed in the second weight.

The wire penetration hole may be larger than the pulley guide.

The charger may further comprise a guide shaft penetrating the weight guide.

A guide hole guided by the guide shaft may be formed in the second weight.

A weight penetration hole through which the first weight passes may be formed on a bottom surface of the guide.

The damper may comprise a roller with which the second weight is in contact; a damper guide in which the roller is rotatably disposed; a damper housing in which the damper guide is disposed; and a spring disposed in the damper housing and elastically supporting the damper guide.

### [Advantageous Effect]

According to this embodiment, as the wire is drawn out, the restoring force gradually increases, so that the charging cable can be quickly recovered, and as the wire is recovered, the restoring force gradually decreases, so that damage that may occur when recovering the charging cable can be minimized.

In addition, when the second weight falls, the second weight comes into contact with the damper, and the spring installed in the damper can absorb the shock, thereby minimizing damage or breakage of the weight guide and the second weight.

In addition, the shock or vibration generated when the second weight is dropped is absorbed by the spring, minimizing the shock or vibration transmitted to the charger body.

### [Description of Drawings]

FIG. 1 is a perspective view illustrating a charger according to the present embodiment;
FIG. 2 is a perspective view illustrating a wire device according to the present embodiment;
FIG. 3 is a perspective view illustrating a pulley and a pulley bracket according to the present embodiment;
FIG. 4 is a view illustrating the process when a wire is gradually pulled according to the present embodiment;
FIG. 5 is a perspective view illustrating a damper according to the present embodiment; and
FIG. 6 is a view illustrating a plurality of dampers and a second weight according to the present embodiment.

### [Best Mode]

Hereinafter, specific embodiments of the present disclosure will be described in detail with reference to the drawings.

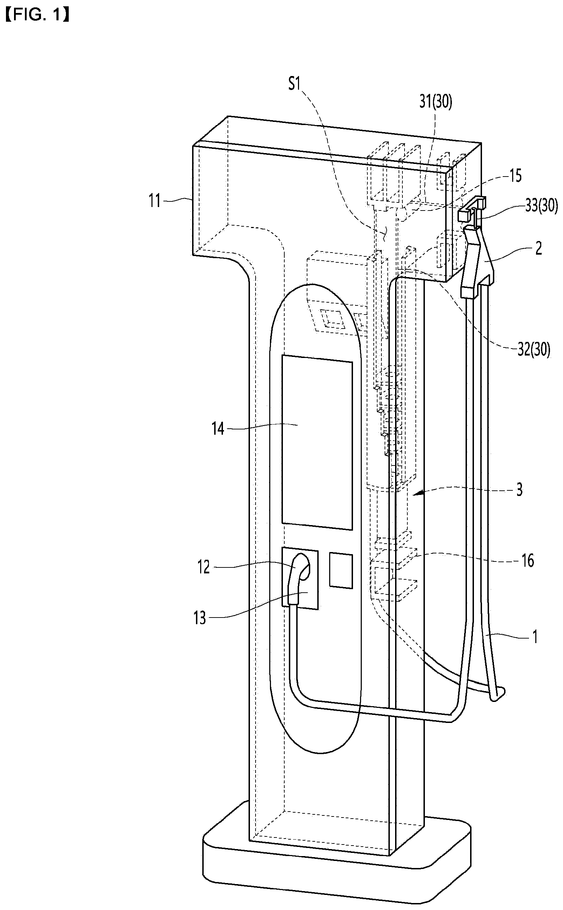

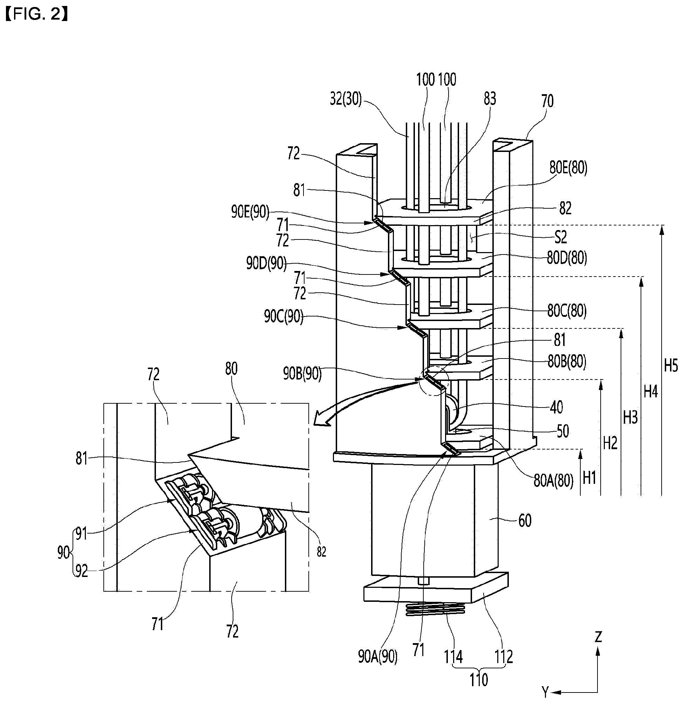

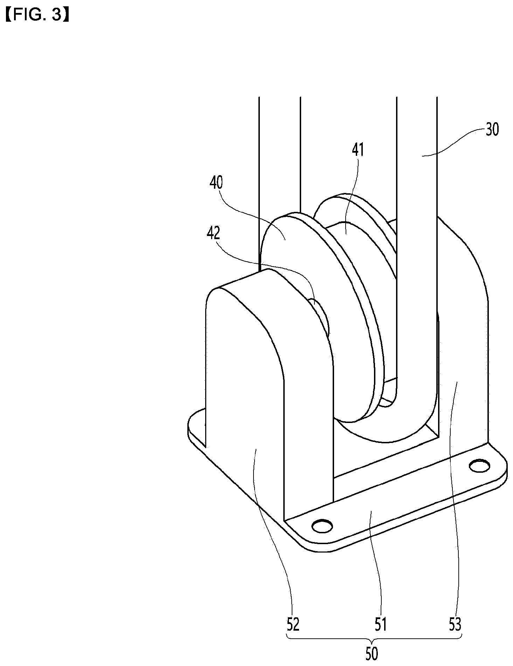

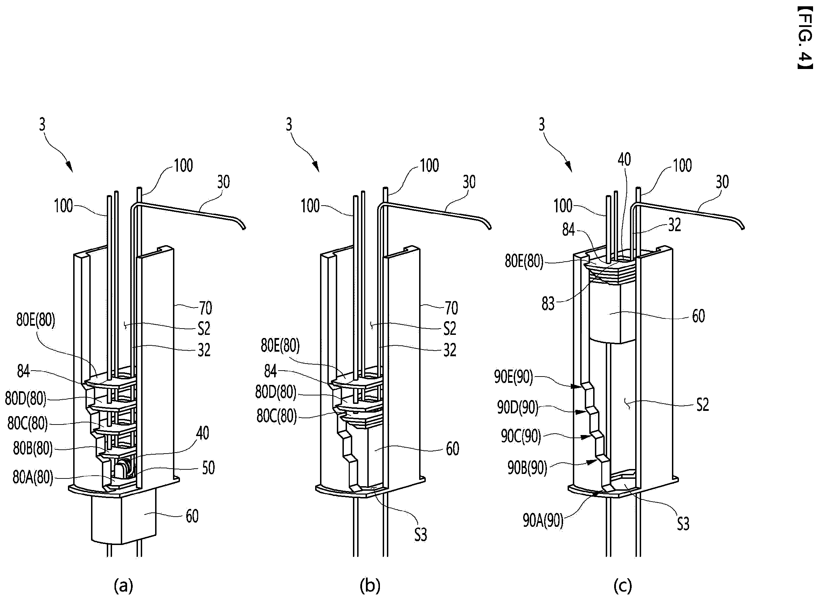

FIG. 1 is a perspective view illustrating a charger according to the present embodiment; FIG. 2 is a perspective view illustrating a wire device according to the present embodiment; FIG. 3 is a perspective view illustrating a pulley and a pulley bracket according to the present embodiment; and FIG. 4 is a view illustrating the process when a wire is gradually pulled according to the present embodiment.

The charger may comprise a charging cable 1, a cable cover 2, and a wire device 3.

The charger may further comprise a power module (not illustrated) to which a charging cable 1 is connected, and a charger body 11 that accommodates the power module.

The charger body 11 may form the outer appearance of the charger. A space S1 may be formed inside the charger body 11.

One end of the charging cable 1 may be connected to a power module inside the charger body 11, and the other end of the charging cable 1 may have a connector 12 (charging gun or plug) connected to a vehicle such as an electric vehicle.

The charging cable 1 may pass through a cable penetration formed in the charger body 11 between one end and the other end.

A connector holder 13 on which a connector 12 is mounted may be placed on the charger body 11.

A display 14 that displays various information related to charging may be placed on the charger body 11.

A cable cover 2 may be placed on the charging cable 1.

A cable cover 2 may be placed between one end of the charging cable 1 and the connector 12. The cable cover 2 may be placed to wrap a part of the charging cable 1.

The cable cover 2 may be located on the outside of the charger body 11.

The charging cable 1 may be recovered to a recovery position (initial position) or extended to a long distance from the recovery position into the vehicle.

The wire device 3 may comprise a wire 30.

An example of a wire device 3 may comprise a wire 30 connected to a cable cover 2.

Another example of a wire device 3 may comprise a wire 30 connected to a charging cable 1 without including a cable cover 2.

Hereinafter, the wire 30 is described as being connected to the cable cover 2, but it is also possible for the wire 30 to be connected to the charging cable 1 via a ring or the like without being connected to the cable cover 2.

One end of the wire 30 may be placed in the charger body 1, and the other end of the wire 30 may be connected to the cable cover 2.

The wire device 3 may pull the wire 30 by the weight and help the charging cable 1 to be recovered to the recovery position.

The recovery position may be a position where the cable cover 2 is close to the charger body 11, as illustrated in FIG. 1.

The wire device 3 may be placed so as to be accommodated in a space S1 formed inside the charger body 1 or may be placed on the outer surface of the charger body 1.

When the wire device 3 is accommodated in the charger body 1, the outer appearance of the charger may be improved and damage or breakage of the wire device 3 may be minimized.

Hereinafter, an example in which the wire device 3 is accommodated in the charger body 1 is described, but the wire device 3 is not limited to being accommodated in the charger body 1, and the wire device 3 may be located outside the charger body 1.

A wire hole through which a wire 30 passes may be formed in the charger body 11.

The wire hole maymay be formed at the upper portion of the charger body 11.

The wire 30 may pull the charger cover 2 to the upper portion of the charger body 1.

Among the wires 30, the portion located inside the charger body 1 may be an inner wire 31, 32. Among the wires 30, the portion located outside the charger body 1 may be an outer wire 33.

At least one wire guide 15 for guiding a wire 30 maymay be placed in the space of the charger body 1.

The wire guide 15 may be placed on the inner upper portion of the charger body 1.

An example of a wire guide 15 may comprise at least one pulley. The wire guide 15 may comprise a plurality of pulleys. The plurality of pulleys may be spaced apart. The plurality of pulleys may be spaced apart in a horizontal direction.

The inner wire 31, 32 may comprise an upper wire 31 (see FIG. 1) extended approximately horizontally or obliquely by a wire guide 15.

The upper wire 31 maymay be directed toward the wire hole formed in the charger body 11.

The inner wire 31, 32 may comprise a lower wire 32 (see FIG. 1) bent into a U shape by a wire device 30.

One end of the lower wire 32 maymay be connected to the upper portion of the charger body 1, and the upper wire 31 may be bent at the upper end of the lower wire 32.

As illustrated in FIG. 2, the wire device 3 may comprise a pulley 40 that guides the wire 30, a pulley guide 50 in which the pulley 40 is rotatably disposed, and a first weight 60 disposed on the pulley guide 50.

The pulley 40 may be raised by the wire 30.

The outer circumference of the pulley 40 may be formed with a groove 41 that may accommodate a part of the wire 30.

The pulley 40 may be rotatably disposed on the pulley guide 50 as illustrated in FIGS. 2 and 3.

A support shaft 42 may be disposed on the pulley 40. The support shaft 42 may be disposed to protrude from the pulley 40. The support shaft 42 may be disposed horizontally.

The pulley 40 may be raised by the wire 30 and lowered by the pulley guide 50, the first weight 60, and the second weight 80.

The pulley guide 50 may comprise a first weight mounter 51 on which a first weight 60 is mounted.

The pulley guide 50 may further comprise a pair of supporters 52, 53 erected on the first weight mounter 51.

A pair of supporters 52, 53 may support a support shaft 42. A pair of supporters 52, 53 may be spaced apart in the horizontal direction.

The first weight 60 may be a movable counterweight fastened to the pulley guide 50. The size of the first weight 60 may be larger than the size of the pulley guide 50.

The first weight 60 may be placed on the bottom surface of the first weight mounter 51. The first weight 60 may be fastened to the first weight mounter 51 using a fastening member such as a screw.

The first weight 60 may be raised together with the pulley guide 50 and lowered together with the pulley guide 50.

The first weight 60 may be a lower weight placed below the pulley guide 50. The first weight 60 may be a weight that pulls the pulley guide 50 downward regardless of its height.

The wire device 3 may comprise a weight guide 70, a second weight 80, and a damper 90.

The weight guide 70 may guide the second weight 80. The weight guide 70 may be disposed lengthwise in the vertical direction Z inside the charger body 11.

An inner space S2 may be formed in the weight guide 70.

A weight penetration hole S3 through which a first weight 80 passes may be formed on the bottom surface of the weight guide 70. As illustrated in FIG. 4, the first weight 80 may pass through the weight penetration hole S3 and lower to the lower side of the weight guide 70. The first weight 80 may pass through the weight penetration hole S3 and be raised to the inner space S2 of the weight guide 70.

When the first weight 80 is raised, the first weight may be surrounded by the weight guide 70 and protected by the weight guide 70.

A damper mounting portion 71 on which a damper 90 is mounted may be formed on the weight guide 70. A guide portion 72 for guiding a second weight 80 may be formed on the weight guide 70.

The damper mounting portion 71 may be formed to be inclined. The damper mounting portion 71 may be formed to be inclined downward from one end of the damper mounting portion 71 to the other end of the damper mounting portion 71. The damper mounting portion 71 may have an obtuse angle of inclination with respect to the guide portion 72. The damper mounting portion 71 may be formed to be inclined at an angle exceeding 90° with respect to the guide portion 72.

The guide portion 72 may be formed in a bent shape at the damper mounting portion 71. The guide portion 72 may be vertical. The second weight 80 may be guided to the guide portion 72 and may be guided to be raised and lowered while maintaining a horizontal state.

When a plurality of second weights 80 are provided, a plurality of the damper mounting portions 71 and a plurality of guide portions 72 may be formed, respectively.

The guide portion 72 may connect a pair of adjacent damper mounting portions 71 among a plurality of damper mounting portions.

A plurality of guide portions 72 may be formed.

The weight guide 70 may be formed in a step shape with a plurality of damper mounting portions 71 and a plurality of guide portions 72.

The second weight 80 may be accommodated in the inner space S and raised or lowered by being guided by the weight guide 70.

The second weight 80 may be accommodated inside the weight guide 70.

The second weight 80 may be an upper weight located above the first weight 60. The second weight 80 may be a variable weight that may be in contact with or separated from the first weight 60.

The second weight 80 may be raised by at least one of the pulley guide 50 and the first weight 60.

The second weight 80 may come into contact with the pulley guide 50 when the pulley guide 50 is raised, and may be raised by the pulley guide 50.

The second weight 80 may come into contact with the first weight 60 when the first weight 60 is raised, and may be raised by the first weight 60.

Hereinafter, the second weight 80 is described as being in contact with the first weight 60 and being raised by the first weight 60, but the second weight 80 is not limited to being in contact with the first weight 60, and it is also possible for it to be in contact with the pulley guide 50 and be raised by the pulley guide 50.

A damper 90 may be placed on the weight guide 70. The damper 90 may be in contact with or separated from the second weight 80. When the second weight 80 is lowered, the second weight 80 may be in contact with the damper 90, and when the second weight 80 is raised, the second weight 80 may be separated from the damper 90.

The connector 12 of the charging cable 1 may be pulled out from the connector holder 13 by the user and pulled close to the vehicle by the user. The cable cover 2 may be moved away from the wire hole, and some of the inner wires 31 and 32 among the wires 30 may be pulled out to the outside of the charger body 1 through the wire hole and become outer wires 33.

As the inner wire 31, 32 of the wire 30 is gradually pulled out, a force that pulls the pulley 40 upward may be applied to the wire 30, the pulley guide 50 may be raised together with the pulley 40, and the first weight 60 may come into contact with the second weight 80 accommodated in the space S to raise the second weight 80.

The weight of the pulley 40, the weight of the pulley guide 50, the weight of the first weight 60, and the weight of the second weight 80 may all act on the wire 30, and a pulling force (that is, restoring force) that pulls the cable cover 2 into the wire hole may be acted on the wire 30.

The inner wire 32 may recover the cable cover 2 to the recovery position by pulling force (restoring force).

Meanwhile, when the user moves the connector 12 closer to the charger body 1 or reduces the external force applied to the charging cable 1, the lower end of the lower wire 32 may be lowered by the weight of the pulley 40, the weight of the pulley guide 50, the weight of the first weight 60, and the weight of the second weight 80, and the second weight 80 may be seated on the damper 70 during the lowering, and the second weight 80 may be separated from the first weight 60.

When the second weight 80 is seated on the damper 90 and separated from the first weight 60, the weight of the pulley 40, the weight of the pulley guide 50, and the weight of the first weight 60 may act on the inner wire 32, and the restoring force acting on the inner wire 32 may be reduced.

A gradient portion 81 that is seated on a damper 90 may be formed on the second weight 80.

The gradient portion 81 may be formed close to the circumference part 82 among the central and circumference parts of the second weight 80 or on a part of the circumference part 82.

The gradient portion 81 may be inclined toward the downward inclined direction.

A wire penetration hole 83 through which a wire 30 passes may be formed in the second weight 80.

The size of the wire penetration hole 83 may be larger than the size of the pulley guide 50. When the pulley guide 50 is raised, the pulley guide 50 may be inserted into the wire penetration hole 83, and the first weight 60 disposed in the pulley guide 50 may come into contact with the second weight 80.

The damper mounting portion 71 may be formed to be inclined at the same angle as the gradient portion 81. The damper mounting portion 71 may be inclined toward the upward inclined direction.

The damper 90 mounted on the damper mounting portion 71 may be mounted at an angle, and the damper 90 may be positioned at an angle with respect to the horizontal plane.

The damper 90 disposed in the damper mounting portion 71 may comprise an upper damper 91 having a high upper height and a lower damper 92 having a low upper height. The upper damper 91 and the lower damper 92 may be mounted together in one damper mounting portion. The upper damper 91 and the lower damper 92 may be disposed in a row in the damper mounting portion 71.

The upper damper 91 and the lower damper 92 may have the same structure, and their upper heights may be different from each other. The upper height of the upper damper 91 may be higher than the upper height of the lower damper 92.

A plurality of damper mounting portions 71 may be formed on the weight guide 70, a plurality of second weights 80 may be provided, and a plurality of dampers 90 may be provided.

The plurality of damper mounting portions 71 may have different heights.

Dampers 90 may be individually placed for each second weight 80.

The plurality of dampers 90 may have different heights.

When the upper height of the first weight 60 is lower than the lower height of the weight guide 70, the plurality of weights 80 may be spaced apart from each other in the vertical direction Z.

When the first weight 60 is raised, a plurality of second weights 80 may be sequentially stacked on the first weight 60, and the number of second weights 80 stacked on the first weight 60 may gradually increase.

As the number of second weights 80 laminated on the first weight 60 increases, the restoring force (pulling force) of the inner wire 32 may increase.

The weight of each of the plurality of second weights 80 may be different. The plurality of second weights 80 may be heavier as they are positioned higher. The plurality of second weights 80 may be lighter as they are positioned lower.

Hereinafter, an example in which a wire device 3 comprises five dampers 90A, 90B, 90C, 90D, 90E and five weights 80A, 80B, 80C, 80D, 80E will be described.

The five dampers 90A, 90B, 90C, 90D, 90E may comprise a first damper 90A having a first height H1, a second damper 90B having a second height H2 higher than the first height H1, a third damper 90C having a third height H3 higher than the second height H2, a fourth damper 90D having a fourth height H4 higher than the third height H3, and a fifth damper 90E having a fifth height H5 higher than the fourth height H4.

The five weights 80A, 80B, 80C, 80D, 80E may comprise a first variable weight 80A seated on or spaced from the first damper 90A, a second variable weight 80B seated on or spaced from the second damper 90B, a third variable weight 80C seated on or spaced from the third damper 90C, a fourth variable weight 80D seated on or spaced from the fourth damper 90D, and a fifth variable weight 80E seated on or spaced from the fifth damper 90E.

The fifth variable weight 80E may be heavier than the fourth variable weight 80D, the fourth variable weight 80D may be heavier than the third variable weight 80C, the third variable weight 80C may be heavier than the second variable weight 80B, and the second variable weight 80B may be heavier than the first variable weight 80A.

Hereinafter, the common configuration of five weights 80A, 80B, 80C, 80D, 80E is described as weight 80, and the common configuration of five dampers 90A, 90B, 90C, 90D, 90E is described as damper 90.

The positions of the gradient portions 81 of the plurality of second weights 80 may be different.

The gradient portion 81 formed on one second weight (for example, the first variable weight 80A) among the plurality of second weights 80 may be closer to the left end among the left and right ends of the weight guide 70.

The gradient portion 81 formed on another second weight (for example, the fifth variable weight 80E) among the plurality of second weights 80 may be closer to the right end among the left and right ends of the weight guide 70.

The gradient portion 81 of the second weight located on the upper side may not overlap the second weight located on the lower side in the vertical direction Z. For example, the gradient portion 81 of the second variable weight 80B may not overlap with the first variable weight 80A in the vertical direction Z.

The gradient portion 81 of the plurality of second weights 80 may not overlap in the vertical direction Z.

The damper located on the upper side and the damper located on the lower side may not overlap in the vertical direction Z. For example, the second damper 90B may not overlap the first damper 90A in the vertical direction Z.

The wire device 3 may further comprise a guide shaft 100 penetrating the weight guide 70.

The guide shaft 100 may be disposed vertically long inside the cabinet body 11.

The guide shaft 100 may guide the first weight 60 and the second weight 80.

A guide hole guided to a guide shaft 100 may be formed in the first weight 60. The first weight 60 may be raised and lowered along the guide shaft 100.

A guide hole 84 guided by a guide shaft 100 may be formed in the second weight 80. The second weight 80 may be raised and lowered along the guide shaft 100.

The guide hole 84 of the second weight 80 may face the guide hole of the first weight 60 in the vertical direction Z.

A plurality of guide shafts 100 may be provided. The plurality of guide shafts 100 may be spaced apart in the horizontal direction.

When a plurality of guide shafts 100 are disposed, a plurality of guide holes 60 of the first weight and a plurality of guide holes 84 of the second weight 80 may be formed, respectively, and arbitrary rotation of the first weight 60 or the second weight 80 may be restricted.

The wire device 3 may further comprise an elastic member 110 disposed at the bottom part of the first weight 60.

The elastic member 110 may comprise an elastic body 112 connected to the lower part of the first weight 60.

An example of the elastic body 112 may be an elastic rubber such as ethylene propylene diene monomer (EDPM).

The elastic member 110 may comprise a spring 114. The spring 114 may be connected to the elastic body 112 or the first weight 60.

An example of a spring 114 may be a coil spring.

The elastic member 110 may come into contact with the stopper 15 (see FIG. 1) placed on the charger body 1 when the first weight 60 is lowered, and may minimize damage that may occur when the first weight 60 is lowered rapidly.

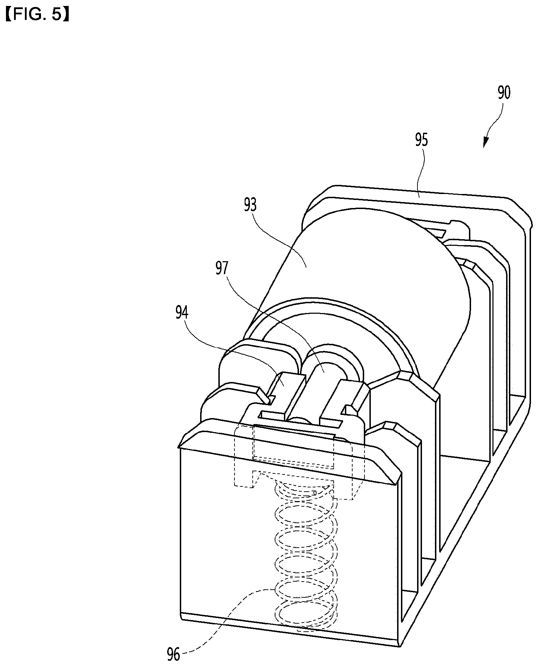

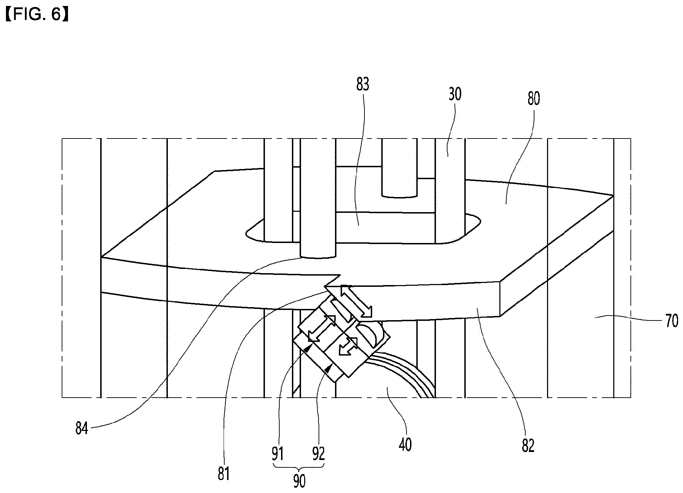

FIG. 5 is a perspective view illustrating a damper according to the present embodiment; and FIG. 6 is a view illustrating a plurality of dampers and a second weight according to the present embodiment.

The damper 90 may comprise a roller 93 with which the second weight 80 comes into contact, a damper guide 94 in which the roller 93 is rotatably disposed, a damper housing 95 in which the damper guide 94 is disposed, and a spring 96 disposed in the damper housing 95 to elastically support the damper guide 94.

A support shaft 97 rotatably supported on a damper guide 94 may be disposed on the roller 93.

The roller 93 may be an idle roller.

Each of the upper damper 91 and the lower damper 92 illustrated in FIG. 2 may comprise a roller 93, a damper guide 94, a damper housing 95, and a spring 86.

When the second weight 80 falls, the gradient portion 81 of the second weight 80 may be first seated on the roller 93 and slide along the roller 93. The roller 93 may help the second weight 80 to be smoothly seated on the damper 90 while rotating.

The damper guide 94 may compress the spring 96 by the weight of the second weight 80, and the damper 90 may absorb the shock caused by the dropping of the second weight 80.

The gradient portion 81 of the second weight 80 may be first seated on the roller 93 of the upper roller 91 and then seated on the lower roller 92 along the roller 93 of the upper roller 91.

The gradient portion 81 of the second weight 80 may also be simultaneously seated on the roller 93 of the upper roller 91 and the roller 93 of the lower roller 92.

The above description is merely an example of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but to explain it, and the scope of the technical idea of the present disclosure is not limited by these embodiments.

The scope of protection of the present disclosure should be interpreted by the claims below, and all technical ideas within a scope equivalent thereto should be interpreted as being comprised in the scope of the rights of the present disclosure.

## Claims

1. A charger comprising:
a wire;
a pulley guiding the wire;
a pulley guide in which the pulley is rotatably disposed;
a first weight disposed in the pulley guide;
a weight guide;
a second weight accommodated inside the weight guide and raised by at least one of the pulley guide and the first weight; and
a damper disposed in the weight guide and on which the second weight is seated when the second weight is lowered.

2. The charger of claim 1,
wherein a gradient portion seated on the damper is formed on the second weight.

3. The charger of claim 2,
wherein the weight guide comprises a damper mounting portion on which the damper is mounted, and
wherein the damper mounting portion is formed to be inclined at the same angle as the gradient portion.

4. The charger of claim 1,
wherein a plurality of second weights are provided, and
wherein the damper is disposed for each of the second weights.

5. The charger of claim 4,
wherein the plurality of second weights are heavier as they are located at the top.

6. The charger of claim 4,
wherein the second weight has a gradient portion formed that is seated on the damper, and
wherein a plurality of second weights are with different positions of the gradient portions.

7. The charger of claim 6,
wherein the gradient portion of the second weight located on the upper side among the plurality of second weights does not overlap the gradient portion of the second weight located on the lower side among the plurality of second weights in the vertical direction.

8. The charger of claim 4,
wherein the damper located on the upper side and the damper located on the lower side does not overlap in the vertical direction.

9. The charger of claim 4,
wherein the weight guide comprises a damper mounting portion on which the damper is mounted, and
wherein a plurality of damper mounting portions are provided, and heights of the plurality of damper mounting portions are different from each other.

10. The charger of claim 9,
wherein the weight guide further comprises a guide portion that guides the second weight, and
wherein the guide portion connects a pair of adjacent damper mounting portions among a plurality of damper mounting portions.

11. The charger of claim 1,
wherein the damper comprises an upper damper and a lower damper mounted on the damper mounting portion, and
wherein an upper height of the upper damper is higher than an upper height of the lower damper.

12. The charger of claim 1,
wherein a wire penetration hole through which the wire passes is formed in the second weight.

13. The charger of claim 1,
wherein the wire penetration hole is larger than the pulley guide.

14. The charger of claim 1, further comprising:
a guide shaft penetrating the weight guide,
wherein a guide hole guided by the guide shaft is formed in the second weight.

15. The charger of claim 1,
wherein a weight penetration hole through which the first weight passes is formed on a bottom surface of the guide.

16. The charger of claim 1,
wherein the damper comprises:
a roller with which the second weight is in contact;
a damper guide in which the roller is rotatably disposed;
a damper housing in which the damper guide is disposed; and
a spring disposed in the damper housing and elastically supporting the damper guide.
